# DEMANDE DE BREVET EUROPEEN

(11) **EP 1 233 289 A2**
(43) Date de publication de la demande: **21.08.2002**
(21) Numéro de dépôt: 02290263.9
(22) Date de dépôt: 05.02.2002
(51) Int. Cl.: G02B 6/245, H02G 1/12

(54) **Procédé de dénudage de fibre optique et fibre ainsi obtenue**

(30) Priorité: 20.02.2001 FR 0102255
(71) Demandeur: HIGHWAVE OPTICAL TECHNOLOGIES, 22300 Lannion (FR)
(72) Inventeur: Thebault, Fabrice, 22300 Ploubezre (FR); Peigne, Guillaume, 44522 Roche-Blanche (FR); Rio, Stéphane, 56170 Quiberon (FR); Caffiau, Johann, 22560 Ile-Grande (FR)
(74) Mandataire: Texier, Christian

(57) **Abrégé**

La présente invention concerne un procédé de dénudage d'une fibre optique, caractérisé par le fait qu'il comprend les étapes qui consistent à : retirer localement et mécaniquement une partie du revêtement externe (30) de la fibre (40), déposer un solvant chimique (60) sur la périphérie de cette zone de la fibre, et retirer mécaniquement le ou les revêtements (30) ainsi fragilisés.

## Description

La présente invention concerne le domaine des fibres optiques.

Plus précisément encore, elle concerne le domaine du dénudage des fibres optiques.

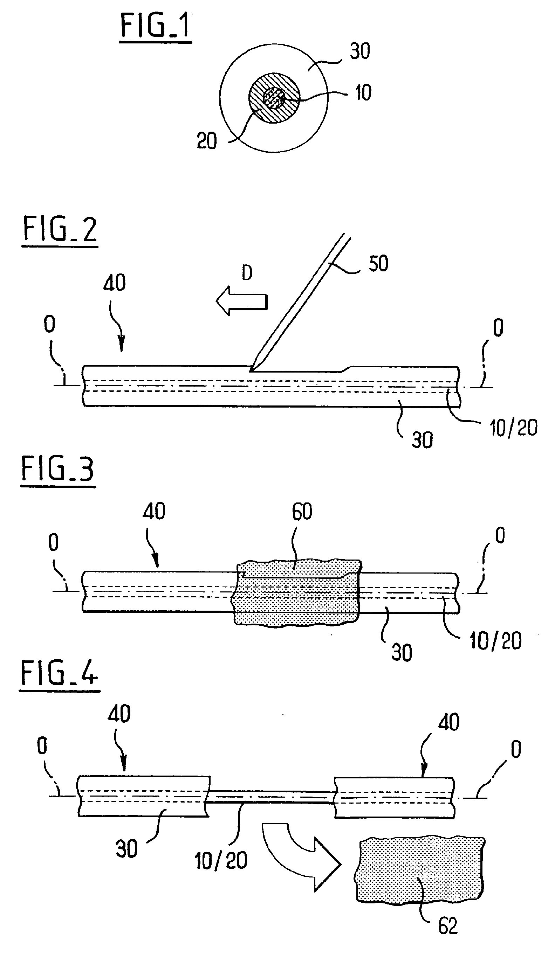

Généralement une fibre optique est composée de trois parties : un coeur 10, une gaine 20 et des revêtements plastiques 30, comme schématisé sur la figure 1. Typiquement la gaine 20 a un diamètre de l'ordre de 125µm, tandis que les revêtements 30 ont un diamètre de l'ordre de 200 à 450µm.

Le coeur 10, qui est la partie optiquement active, est le plus souvent en silice (SiO₂) dopée, par exemple au germanium (Ge).

La gaine 20 qui sert « d'isolant » dans le transport de l'énergie lumineuse est en général en silice pure.

Les revêtements 30 protègent la fibre nue (coeur 10 + gaine 20) des contraintes mécaniques et chimiques du milieu environnant. Ils doivent, à ce titre, former barrage vis-à-vis de l'environnement (eau, UV ...).

Les agressions mécaniques comprennent entre autres des courbures, micro-courbures (déformations locales de l'interface coeur-gaine), écrasement, traction, abrasion, torsion. Ces agressions peuvent entraîner des pertes de transmission et une baisse des caractéristiques mécaniques.

Les agressions chimiques sont notamment dues à l'eau et à l'hydrogène qui détériorent la fibre dans le temps. Par exemple l'action de l'eau sur des micro-fissures présentes dans la silice entraîne une diminution de la résistance mécanique et donc de la durée de vie de la fibre. De même, la diffusion de l'hydrogène dans la silice provoque une augmentation des pertes en transmission.

Pour tenir compte de ces agressions, habituellement, la fibre est protégée par deux revêtements polymères 30 : un revêtement primaire, souple, en acrylate ou en uréthane acrylate, destiné à protéger plus particulièrement la fibre des micro courbures, et un revêtement secondaire, plus dur, en epoxyacrylate ou en uréthane-époxyacrylate, destiné à protéger la fibre des contraintes extérieures.

Les revêtements 30 connus permettent typiquement d'assurer à la fibre, une résistance à la traction d'environ 6daN.

L'homme de l'art se reportera utilement aux documents [1], [2] et [3] qui traitent notamment des fibres optiques et réalisation de composants sur celles-ci.

Bien que leur destruction, même locale, fragilise fortement la fibre optique (par exemple sujette aux agressions du milieu extérieur tel que l'eau (phénomène d'hydrolyse), favorisant la propagation des micro fissures présentes à la surface de la silice), il est parfois nécessaire de dénuder localement des fibres optiques pour intervenir sur celles-ci, par exemple pour la réalisation de réseaux de Bragg.

Le dénudage consiste en une ablation locale du ou des revêtements d'une fibre optique.

Différentes techniques de dénudage ont déjà été proposées. Cependant aucune ne donne pleinement satisfaction.

En particulier, les techniques actuelles de dénudage ne garantissent aucune conservation de la résistance à la traction et ne permettent pas d'en assurer une quelconque répétabilité.

L'utilisation de pinces à dénuder [4] entraîne par exemple une chute des caractéristiques mécaniques de la fibre optique, dont la résistance à la traction. Cette dégradation est la conséquence du contact physique entre l'ensemble coeur/gaine et la pince qui entraîne l'apparition de micro fissures à la surface de la silice. Ces micro fissures répondent alors à un phénomène de propagation favorisant la fragilisation des fibres ainsi dénudées.

La présente invention a pour but de proposer un nouveau de procédé de dénudage de fibres optiques.

La présente invention a en particulier pour but de fournir un procédé de dénudage ne nécessitant aucune élévation en température ce qui garantit l'intégrité mécanique et chimique des différents éléments constituant la fibre optique. Ceci, contrairement aux techniques de dénudage par jet d'air chaud haute pression [5] ou encore par système de couteaux chauffants [6].

L'invention a en particulier pour but de proposer un procédé permettant de dénuder localement la gaine d'une fibre, en ôtant localement et sur des longueurs très diverses le ou les revêtements d'une fibre optique, en conservant des caractéristiques mécaniques élevées, en particulier une bonne résistance à la traction.

Dans le cadre de l'invention, le tronçon à dénuder peut aussi bien se trouver en extrémité qu'au milieu d'un segment de fibre.

La présente invention peut notamment trouver application dans les différents procédés de fabrication de filtres à base de réseaux de Bragg sur tout type de fibres optiques (200µm à 450µm). Le procédé conforme à l'invention n'est cependant pas limité à cette application, son utilisation peut être étendue pour une multitude d'applications nécessitant une ablation locale du ou des revêtements de la fibre.

La présente invention a également pour but de proposer un procédé qui permette d'atteindre, sans la détériorer, la surface externe de la gaine.

En effet, dans de nombreux cas, les contraintes techniques liées aux process de fabrication de composant sur fibres optiques (notamment à base de réseau de Bragg) et les performances mécaniques auxquelles ils doivent répondre, imposent un minimum de contact physique avec l'ensemble coeur / gaine de la fibre en silice.

En particulier, le procédé de l'invention doit permettre, après dénudage une photo inscription de la fibre optique. Et pour permettre cette photo inscription, le procédé doit livrer une fibre dénudée parfaitement propre, après dénudage.

De plus, à titre auxiliaire, dans le but de faciliter la reconstitution ultérieure du ou des revêtements de la fibre, l'invention a de préférence également pour objectif de délivrer des interfaces de dénudage nettes et régulières.

Les buts précités sont atteints dans le cadre de la présente invention, grâce à un procédé comprenant les étapes qui consistent à :
- retirer localement et mécaniquement une partie du revêtement externe de la fibre,
- déposer un solvant chimique sur la périphérie de cette zone de la fibre, et
- retirer mécaniquement le ou les revêtements ainsi fragilisés.

La présente invention concerne également les fibres optiques ainsi obtenues, en particulier des fibres munies d'un réseau de Bragg au niveau de sa zone dénudée.

La présente invention concerne par ailleurs une machine pour la mise en oeuvre du procédé précité. Cette machine comporte au moins :
. des moyens aptes à retirer localement et mécaniquement une partie du revêtement externe de la fibre et
. des moyens aptes à retirer mécaniquement le revêtement de la périphérie de la zone correspondante de la fibre, après fragilisation de celle-ci à l'aide d'un solvant chimique.

Selon d'autres caractéristiques avantageuses de la présente invention, la machine comprend en outre :
. des moyens aptes à déposer un solvant chimique sur la périphérie de la zone traitée de la fibre,
. des moyens aptes à fixer une fibre optique et des moyens aptes à guider des outils de coupe à rotation autour de la fibre,
. des moyens aptes à fixer une fibre optique sous tension constante, et/ou
. des moyens de coupe aptes à réaliser successivement un rabotage de la surface externe de la fibre et une découpe partielle généralement transversale à son axe.

D'autres caractéristiques, buts et avantages, de la présente invention apparaîtront à la lecture de la description détaillée qui va suivre, et en regard des dessins annexés, donnés à titre d'exemple, non limitatifs et sur lesquels :
- la figure 1 précédemment décrite représente une vue schématique en coupe transversale d'une fibre optique classique,
- les figures 2, 3 et 4 représentent schématiquement les trois étapes de base successives conformes à la présente invention permettant le dénudage d'un tronçon de fibre optique,
- les figures 5, 6, 7 et 8 représentent schématiquement quatre étapes successives optionnelles, conforme à la présente invention, permettant d'obtenir des interfaces d'extrémités du tronçon dénudé de parfaite qualité,
- la figure 9 représente une vue générale en perspective éclatée d'une machine conforme à la présente invention,
- la figure 10 représente une vue en perspective d'un premier moyen de fixation de fibre optique,
- la figure 11 représente une vue en perspective d'un second moyen de fixation de fibre optique conforme à la présente invention, conçu pour assurer une tension constante de celle-ci,
- la figure 12 représente une vue en perspective éclatée d'un moyen de rabotage conforme à la présente invention,
- la figure 13 représente une vue latérale des moyens de rabotage,
- la figure 14 représente une vue en coupe des mêmes moyens de rabotage, selon le plan de coupe référencé XIV-XIV sur la figure 13,
- la figure 15 représente une vue partielle en perspective des moyens de rabotage,
- la figure 16 représente une vue en coupe transversale d'un support de fibre optique, conforme à la présente invention.
- la figure 17 représente une vue en perspective éclatée d'un moyen de découpe transversale de fibre conforme à la présente invention, et
- les figures 18 et 19 représentent deux vues en perspective, respectivement en position ouverte et en position fermée, de ces moyens de découpe transversale.

Dans le cadre de la présente invention, avant mise en oeuvre du procédé de dénudage, la fibre, schématisée sous la référence 40 sur les figures 2 et suivantes annexées, est positionnée dans un support. Plus précisément, de préférence, la fibre 40 est positionnée dans un support présentant un dièdre concave en V de précision, afin de limiter les contacts physiques avec l'ensemble coeur 10/gaine 20 de la fibre en silice 40.

Une fois la fibre 40 ainsi positionnée, on procède à l'ablation d'un copeau du revêtement 30 à l'aide d'une lame 50. Cette opération d'ablation d'un copeau dans le revêtement 30 est réalisée en venant raser, mais sans jamais le toucher, l'ensemble coeur 10/gaine 20 de la fibre 40 sur la distance désirée de dénudage. Pour cela, la lame 50 doit être rigoureusement positionnée quant à la distance de son arête de coupe par rapport à l'ensemble coeur 10/gaine 20 et quant à l'angle d'attaque.

Plus précisément encore au cours de cette opération d'ablation, la lame 50 est orientée selon un angle inférieur à 30° par rapport à l'axe O-O de la fibre 40.

Sur la figure 2, on a schématisé sous la référence D le sens de déplacement de la lame 50.

Une fois le copeau du revêtement ainsi retiré, comme illustré sur la figure 3, on recouvre le tronçon de fibre à dénuder préalablement traité mécaniquement, d'un solvant chimique 60. Celui-ci est destiné à détériorer en partie et ramollir la zone du revêtement 30 coïncidant avec la zone de la fibre à dénuder.

Comme schématisé sur la figure 4, il reste alors à retirer mécaniquement le ou les revêtements 30 ainsi fragilisé(s).

De préférence, l'évacuation du ou des revêtements chimiquement attaqué(s) est réalisée à l'aide d'un jet d'air sec ou d'un pinceau imbibé d'éthanol ou d'un bain à ultrasons pour laisser apparaître l'ensemble coeur 10/ gaine 20 de la fibre nue.

Sur la figure 4, on a schématisé sous la référence 62 la partie du revêtement 30 ainsi éliminée, imbibée de solvant.

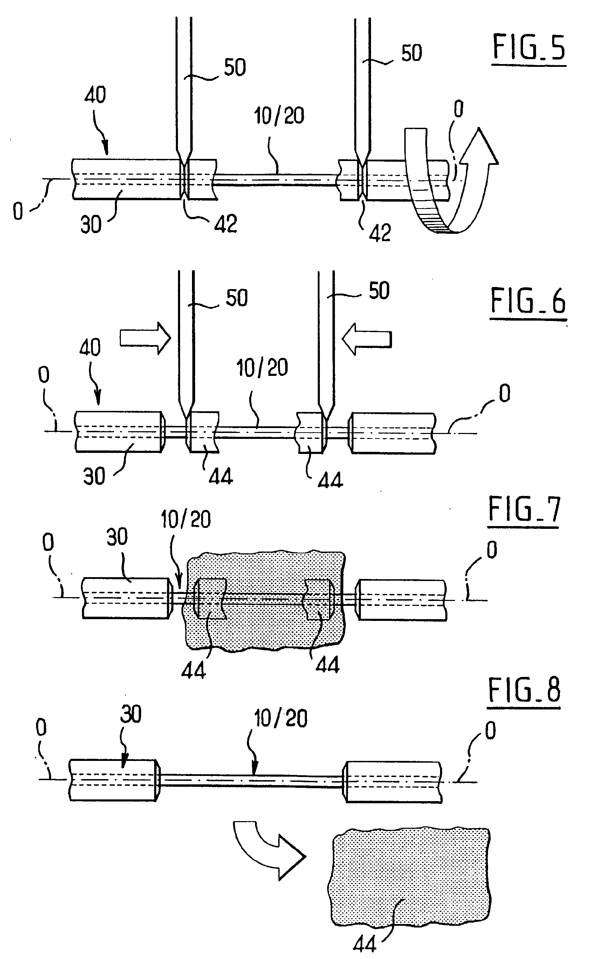

Cependant, de préférence, dans le cadre de la présente invention, il est prévu en outre les étapes schématisées sur les figures 5 à 8 destinées à réaliser des interfaces parfaites en extrémité du tronçon dénudé.

Pour cela, une lame 50 est positionnée, perpendiculairement à l'axe O-O de la fibre, sur chaque extrémité du tronçon à dénuder, légèrement au-delà de la portion retirée à la fin de l'étape illustrée sur la figure 4. Les lames 50 utilisées à l'étape de la figure 5 doivent être également rigoureusement positionnées, de façon à ne jamais être en contact avec l'ensemble coeur 10/ gaine 20 de la fibre. On assure ensuite un mouvement de rotation relatif entre la fibre 40 et les lames 50, de préférence par rotation de la fibre 40 sur elle-même autour de son axe O-O ou le cas échéant par entraînement à rotation des lames 50 autour de la fibre 40 maintenue fixe. Ce mouvement de rotation relatif permet de créer une incision radiale référencée 42 sur la figure 5, au niveau des interfaces de dénudage définitives, sur l'ensemble du périmètre de la fibre.

Par déplacement à translation des lames 50, vers le centre de la zone dénudée, ou à l'aide de tout autre moyen équivalent, les tronçons 44 ainsi délimités par les incisions 42, sont déplacés vers le centre de la zone dénudée (voir figure 6).

Un solvant chimique est ensuite déposé sur ces tronçons 44 (figure 7) puis les tronçons 44 ainsi fragilisés et ramollis sont éliminés mécaniquement. Là encore, de préférence, on utilise pour cela un jet d'air sec ou un pinceau imbibé d'éthanol ou d'un bain à ultrasons afin d'évacuer le tronçon 44 de revêtement attaqué chimiquement et imbibé de solvant.

On obtient ainsi comme illustré sur la figure 8, une fibre 40 dénudée sur un tronçon bien délimité et présentant des interfaces parfaites.

Le procédé de dénudage conforme à la présente invention autorise un contrôle et une répétabilité parfaite des longueur dénudées. Il permet donc un dénudage parfaitement automatisé, par opposition au procédé actuellement connu qui généralement n'autorise qu'un dénudage manuel.

La présente invention permet également une conservation importante des caractéristiques mécaniques de la fibre (conservation d'environ 75% de la résistance à la traction initiale) en limitant les contacts physiques avec l'ensemble coeur 10/gaine 20 en silice. Enfin, il autorise un dénudage aussi bien sur de petites longueurs de l'ordre de 5mm, que sur de grandes longueurs (200mm et plus).

Bien entendu, la présente invention n'est pas limitée aux modalités de mise en oeuvre qui viennent d'être décrites mais s'étend à toutes variantes conformes à son esprit.

Bien évidemment dans l'hypothèse où la zone dénudée est réalisée en extrémité de la fibre, une seule lame 50 est utilisée à l'étape correspondant à la figure 5.

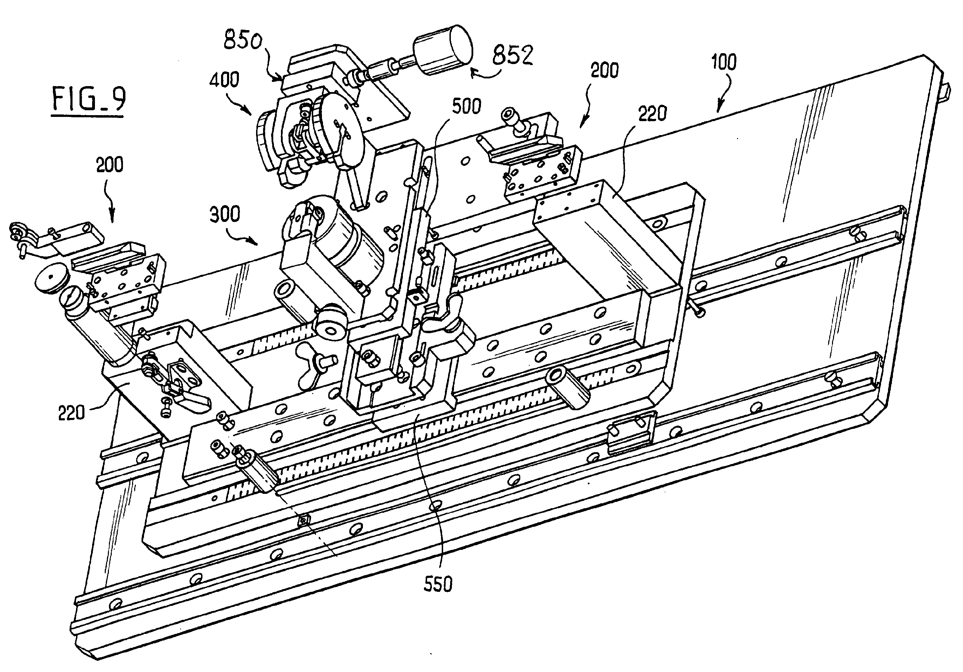

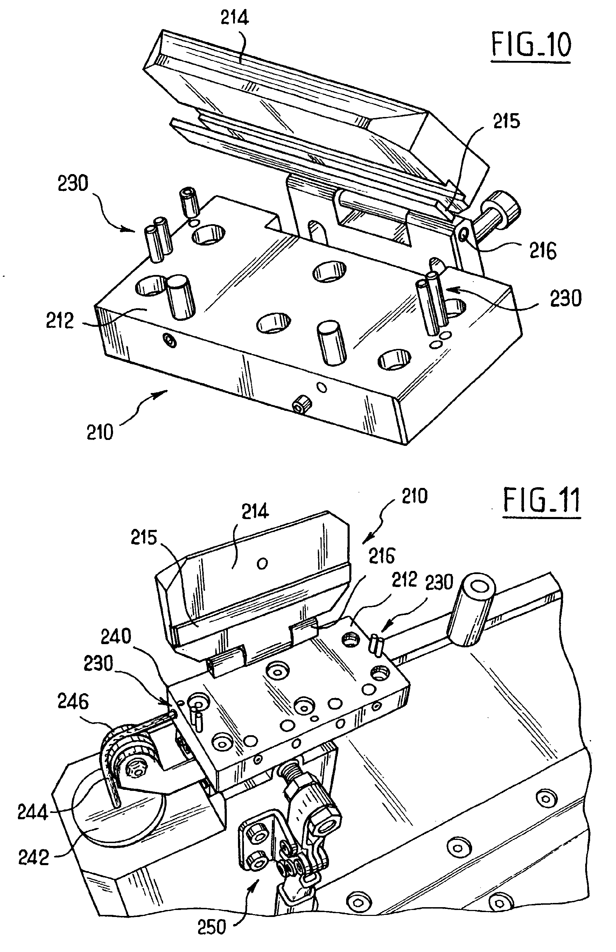

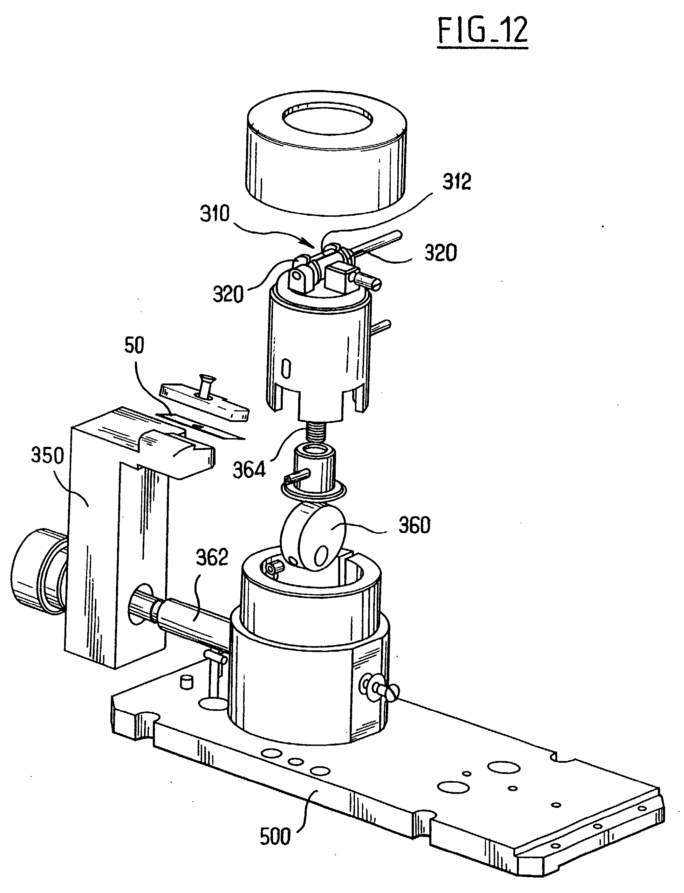

On va maintenant décrire la machine de dénudage conforme à la présente invention, en regard des figures 9 à 19 annexées.

La machine de dénudage conforme à la présente invention comprend essentiellement une platine 100 qui porte deux moyens 200 de fixation d'une fibre optique, un module 300 de rabotage et un module 400 de mise en forme des interfaces par découpe transversale de la fibre optique.

Le cas échéant la machine conforme à la présente invention peut être équipée en outre d'un module d'attaque chimique adapté pour dispenser le solvant assurant le nettoyage, ainsi que des moyens associés de soufflage et aspiration des déchets à éliminer.

Selon une variante, la machine conforme à la présente invention peut être munie d'un binoculaire permettant la visualisation de la section de la fibre à dénuder. Un tel binoculaire facilite le positionnement précis de la fibre face aux outils de découpe et permet de contrôler la qualité des interfaces au cours du dénudage.

Les moyens 200 sont conçus pour immobiliser la fibre optique par rapport à la platine 100, les modules de rabotage 300 et de mise en forme 400 étant mobiles autour de la fibre.

Cette immobilisation de la fibre évite des torsions et traction néfastes.

Plus précisément les modules 300 et 400 sont conçus pour opérer sur le tronçon de fibre tendu entre les deux moyens de fixation 200. Les modules 300 et 400 sont placés sur un premier tiroir 500 lui même porté par un second tiroir 550.

Le second tiroir 550 est guidé à translation sur la platine 100 dans une direction parallèle à l'axe de la fibre. Le premier tiroir 500 est quant à lui guidé à translation sur le second tiroir 550, dans une direction transversale à la direction de déplacement du second tiroir 550 et transversale à la direction de la fibre.

Les deux modules 300 et 400 étant portés par le même tiroir 500, on évite en toute sécurité toute interférence entre les modules d'usinage 300 et 400. En effet ceux-ci sont déplacés alternativement en regard de la fibre. Mais ils ne peuvent être placés simultanément au niveau de celle-ci.

Les moyens de fixation 200 ont la forme générale de pince 210.

Chaque pince 210 comprend ainsi deux mâchoires 212 et 214 articulées autour d'un axe 216.

La mâchoire fixe 212 de chaque pince est portée par le sommet d'une potence 220. Les faces supérieures des mâchoires fixes 212 sont coplanaires.

Les axes d'articulation 216 coaxiaux entre eux, sont parallèles à l'axe de la fibre.

La mâchoire fixe inférieure 212 comporte de préférence, sur l'extérieur de la mâchoire pivotante 214, deux paires de pions en saillie 230 définissant un système de guidage et centrage de la fibre.

La mâchoire pivotante 214 comporte de préférence une bande de matériau à fort coefficient de frottement 215, par exemple une bande en élastomère, destinée à être superposée à la fibre pour garantir l'immobilisation de celle-ci.

Le maintien en position fermée de chaque pince 210 peut être assurée par tous moyens appropriés, par exemple à l'aide d'aimants et/ou de vis, ou encore par tous moyens équivalents.

L'homme de l'art comprendra que la fibre est immobilisée avec précision, lorsque guidée par les pions 230, la mâchoire supérieure 214 est refermée et maintenue sur la mâchoire inférieure 212, la fibre étant pincée entre la garniture 215 et la mâchoire inférieure 212.

Dans le cadre de la présente invention, de préférence, l'une au moins des pinces 210 est adaptée pour assurer une tension constante de la fibre durant toutes les opérations de dénudage.

A cette fin, la mâchoire inférieure 212 de la pince 210 est montée sur un chariot 240 susceptible de coulissement sur le sommet de la potence 220 dans une direction parallèle à l'axe de la fibre. Le chariot 240 est sollicité vers l'extérieur de la zone de traitement, par un contrepoids 242. Plus précisément, le contrepoids 242 est fixé par un cordon 244 au chariot 240 et le cordon passe sur un galet 246 porté par la potence 220.

Bien entendu les moyens de tension à sollicitation constante formés par le chariot 240 et le contrepoids 242 peuvent être remplacés par tous moyens équivalents.

Ces moyens permettent de soumettre la fibre en permanence à une tension calibrée. Ils permettent d'éviter les tractions trop fortes lors des différentes étapes de dénudage (rabotage et arrachage du revêtement). Ils permettent une bonne reproductibilité du procédé de dénudage conforme à la présente invention, puisqu'il rend le procédé indépendant de la manière dont un opérateur positionne et tend la fibre entre ses points de fixation.

Le cas échéant les deux pinces 210 peuvent être munies chacune d'un moyen de sollicitation sous effort constant, par exemple à base de contrepoids, comme indiqué précédemment. Cela permet une compensation de la pression, notamment lors de la mise en forme des interfaces dans les deux sens.

De préférence dans le cadre de la présente invention, chaque pince 210 montée sur un chariot 240 est équipée de plus d'un ensemble 250 adapté pour interdire à la demande tout déplacement du chariot 240, en immobilisant celui-ci sur le haut de la potence associée 220. Ce moyen d'immobilisation est utilisé lors de la mise en place de la fibre.

Le module de rabotage 300 a pour fonction d'enlever un copeau de revêtement extérieur de la fibre, sans atteindre le coeur de celle-ci. Il comporte essentiellement un support 310 de fibre et un support 350 de lame de coupe 50.

Le support 310 de fibre comporte une gorge 312 de positionnement de fibre de section droite en V.

La gorge 312 s'étend parallèlement à l'axe de la fibre.

Dans le cadre de la présente invention, le support de fibre 310 est avantageusement mobile à translation verticalement sur la platine 100 pour être porté au contact de la lame 50. On rappelle que le support 350 de lame de coupe 50 est mobile à translation selon l'axe de la fibre, par déplacement du chariot support 550.

Le support de fibre 310 assure plusieurs fonctions :
. maintenir la fibre sous la lame 50 du rabot,
. servir de butée à la lame de coupe 50, pour que la lame 50 n'entame pas le coeur de la fibre, et
. servir de guide parallèle à l'axe de la fibre, lors du mouvement du rabot 50.

La profondeur de la gorge 312 est adaptée au diamètre de la fibre à usiner, de sorte que seul le revêtement de la fibre émerge de la gorge.

Dans ce contexte, le support de fibre 310 est de préférence amovible et interchangeable.

La gorge 312 débouche sur un méplat 314 parallèle à l'arête de coupe de la lame 50 et parallèle à l'axe de la fibre.

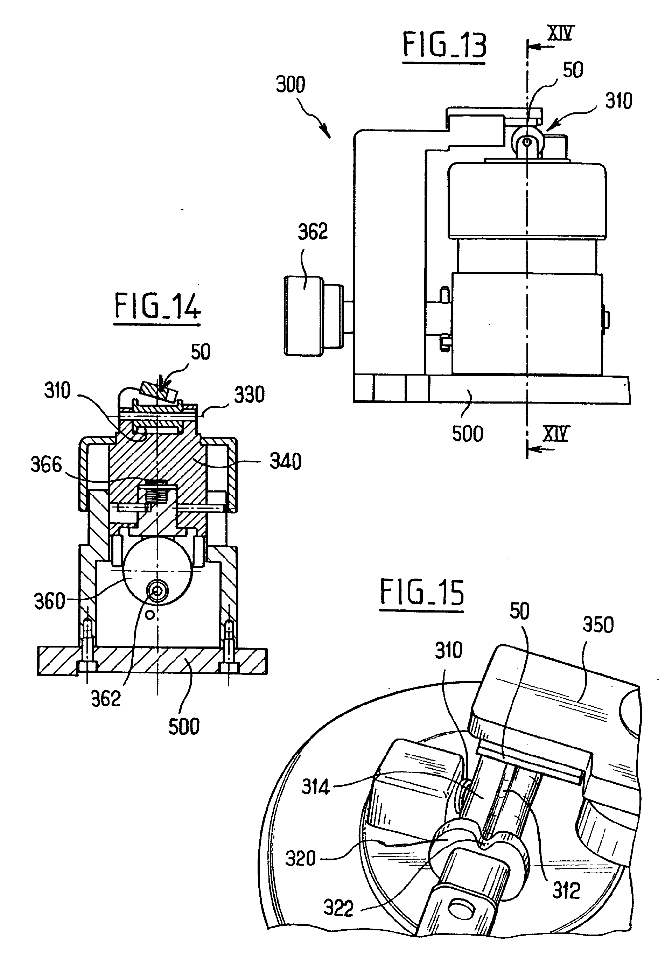

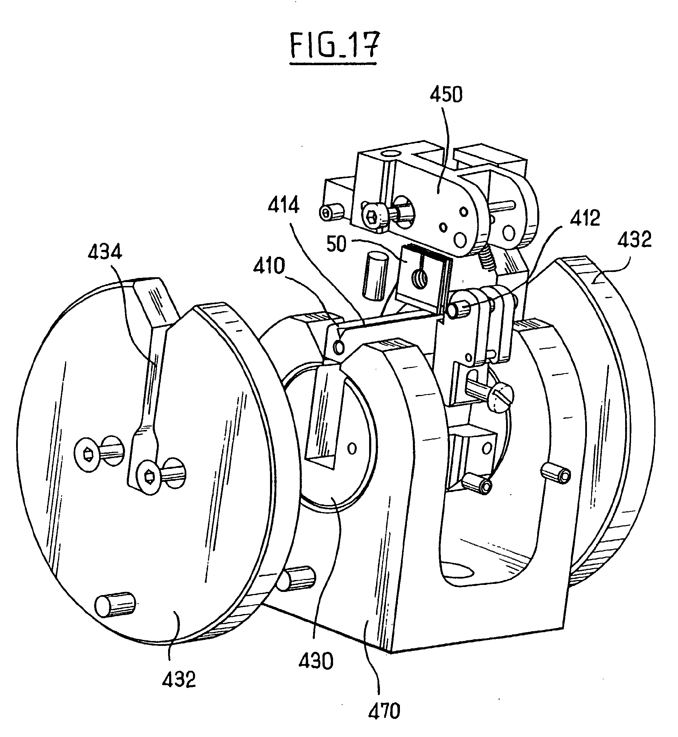

Comme on le voit sur les figures 14 et 15 notamment, de préférence le support 310 comporte à chaque extrémité de la gorge 312, un flasque 320 de plus grand diamètre, lui même muni d'une encoche en V 322 conçue pour guider la gorge 312 vers la fibre, lorsque le support 310 est approché de celle-ci.

Dans le cadre de la présente invention, le support 310 est de préférence monté libre de rotation, sur une embase 340, autour d'un axe 330 parallèle à l'axe de la fibre.

Cette disposition permet grâce à la présence des encoches 322, dans les flasques 320, un autocentrage du support 310 sur la fibre.

A l'utilisation, le support 310 est amené sous le tronçon de fibre à dénuder, la lame de rabot 50 étant placée au dessus. Après précentrage grâce aux encoches en V 322, le support 310 est positionné avec précision par alignement du méplat 314 sur l'arête de coupe de la lame 50.

La lame 50 est en effet amenée en appui contre la fibre et entame le revêtement jusqu'à venir en butée contre le méplat 314.

On obtient ainsi un positionnement simultané et automatique de la fibre optique et de l'outil de coupe 50.

Il suffit alors de déplacer le tiroir 550 parallèlement à l'axe de la fibre, pour enlever le copeau voulu dans le revêtement extérieur de la fibre.

On rappelle que la gorge 312 permet de conserver l'intégrité du coeur de la fibre lors de ce rabotage.

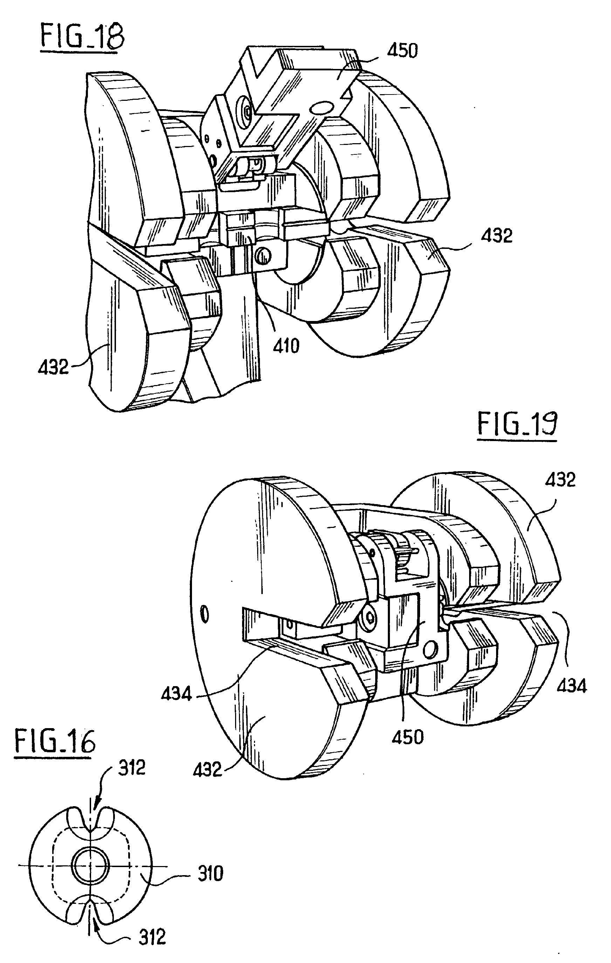

Le cas échéant comme on le voit sur la variante de la figure 16, le support 310 peut être muni de plusieurs gorges 312 de différentes profondeurs adaptées au diamètre extérieure et aux épaisseurs variables des revêtements des fibres à traiter. Ainsi on distingue sur la figure 16 un support cylindrique 310 comportant deux gorges 312 diamétralement opposées, sur sa surface externe.

Bien entendu dans le cadre de la présente invention, le support 310 peut être muni d'un nombre de gorges 312 supérieur à deux. D'une manière plus générale, ce support 310 peut avoir toute section appropriée et ne comporter qu'un seul V de positionnement de manière comparable à l'élément 410.

Les moyens aptes à contrôler les montées et descentes du support 310 peuvent faire l'objet de nombreux modes de réalisation. Selon la représentation donnée sur les figures annexées, ces moyens sont formés par un excentrique 360 commandé par un arbre 362 pour solliciter l'embase 340 servant d'assise au support 310, avec ressort 366 intercalé.

Le module 400 de mise en forme des interfaces comprend essentiellement deux parties :
. une pièce 410 qui sert d'alignement et de butée aux lames de coupe 50 (de manière analogue au V décrit précédemment),
. une pièce 450 portant un train de lames de coupe 50 actionnables en rotation autour de la fibre, et en translation parallèlement à l'axe de la fibre.

Dans le cadre de la présente invention, le bloc de coupe 450 comporte avantageusement plusieurs lames de coupe parallèles, par exemple, 2, 3, 4 voire plus, lames de coupe, placées à faible distance. Cette distance est de préférence variable à souhait grâce à des cales d'épaisseur variable. Cette disposition permet un meilleur arrachage de la section annulaire en bord de la zone dénudée.

Les deux pièces 410 et 450 sont articulées à la manière d'une pince autour d'un axe 412 parallèle à l'axe de la fibre.

La pièce 410 est munie d'au moins un tronçon de gorge en V 414. Comme on le voit sur la figure 18, de préférence la pièce 410 est munie ainsi de plusieurs tronçons alignés de gorge en V 414.

Les deux pièces 410 et 450 sont montées sur un bloc 430 monté à rotation sur une embase 470 solidaire du tiroir 500.

Le bloc 430 est de préférence muni de flasques 432 comportant des gorges latérales 434 alignées sur la gorge 414.

Le maintien de la pièce pivotante 450 sur la pièce fixe 410 peut être assuré par tous moyens appropriés, par exemple par aimants et/ou vis, ou tout autre moyen approprié.

La encore la pièce 410 définissant le V de positionnement de la fibre est de préférence amovible et interchangeable de sorte que la profondeur de la gorge 414 soit toujours adaptée à la taille de la fibre, afin d'éviter de blesser le coeur de celle-ci. La profondeur de la gorge 414 définit la profondeur de coupe, les lames 50 venant en butée contre les flancs extérieurs de celle-ci à l'utilisation.

Le module 400 est avantageusement monté à translation, parallèlement à l'axe de la fibre, sur une platine 850. Le déplacement à translation du module 400 peut être contrôlé par tous moyens appropriés, par exemple un système à vis 852.

A l'utilisation le bloc 430 est amené contre la fibre qui se centre dans la gorge 414. La pièce pivotante 450 porte lame est refermée sur la fibre. Les lames 50 opèrent alors une incision dans le revêtement de la fibre.

Le bloc 430 est alors entraîné en rotation autour de l'axe de la fibre, pour assurer une découpe circulaire de la fibre.

Le bloc 430 peut alors être déplacé en translation parallèlement à l'axe de la fibre, par actionnement des moyens 852, pour arracher le résidu de revêtement au bord de la section dénudée.

Les différents organes mobiles de la machine conforme à la présente invention peuvent être actionnés soit manuellement soit automatiquement. A titre d'exemple selon le mode de réalisation illustré sur les figures annexées, ces organes peuvent être commandés à la rotation et à la translation par des vis actionnées au moyen de bouton par un opérateur. Les vis démultiplient le mouvement et le rendent beaucoup plus régulier. Cette disposition permet ainsi une excellente reproductibilité du procédé de dénudage.

En variante cependant tous ces mouvements peuvent être automatisés à l'aide d'actionneurs à vérins ou motorisés.

Bien entendu les blocs porte lames doivent être amovibles pour permettre de remplacer les trains de lames 50 suite à l'usure.

Le cas échéant l'inclinaison des lames de coupe 50 par rapport à l'axe de la fibre, peut être réglable.

Selon une autre variante, les lames de coupe 50 peuvent être chauffantes pour assurer une meilleure découpe du revêtement.

Des butées sont de préférence prévues sur la platine 100 pour limiter l'amplitude de déplacement des tiroirs 500 et 550, en particulier l'amplitude de déplacement du tiroir 550 selon l'axe de la fibre. Par ailleurs la machine comporte de préférence des moyens, par exemple des vis, conçus pour immobiliser sélectivement les tiroirs 500 et 550 dans une position choisie.

Pour utiliser la machine conforme à la présente invention, qui vient d'être décrite, on procède de préférence essentiellement comme suit :
. Le tronçon de fibre à traiter étant positionné et centré entre les deux pinces 210 celles-ci sont refermées.
. Le module 300 est positionné en regard de la fibre, sur une extrémité du tronçon à raboter.
. Le support 310 est soulevé pour supporter la fibre dans la gorge 312.
. Le module 300 est alors déplacé à translation selon l'axe de la fibre, sur l'amplitude souhaitée, pour retirer un copeau dans le revêtement de la fibre.
. Le support 310 est alors abaissé.
. Un solvant chimique est appliqué et la partie de fibre fragilisée est retirée.
. Le module 400 est engagé à son tour sur la fibre. Il doit être positionné avec précision en regard de la zone axiale de la fibre dont on veut parfaire l'interface.
. La pièce pivotante 450 étant refermée sur la pièce 410, le bloc 430 est entraîné à rotation 3 à 4 tours.
. Le module 400 est alors déplacé à translation pour évacuer vers le centre de la zone usinée, la partie dénudée.
. L'opération du module 400 est réitérée sur la seconde interface.
. Le reste de revêtement retiré est ensuite éliminé. De préférence l'interface est alors nettoyée, par exemple au pinceau imbibé d'éthanol. Le cas échéant cette étape de nettoyage peut être précédée d'une étape de décapage ou d'attaque chimique, auquel cas il est préférable de procéder ensuite à une élimination, par solvant, du décapant. Cette étape d'élimination du décapant peut éventuellement être obtenue à l'aide du même produit que celui retenu pour le nettoyage, par exemple l'éthanol.

On notera néanmoins que dans certaines configurations, les inventeurs ont constaté que la rotation du module 400 n'était pas nécessaire avant sa translation. Dans ce cas une simple incision de la fibre lors de la fermeture de la pièce pivotante 450 sur la pièce 410, précède la translation du module 400.

De préférence, dans le cadre de la présente invention, le module 400 de mise en forme des interfaces comporte plusieurs lames parallèles. Cette disposition permet de limiter les efforts appliqués sur les lames, notamment lorsque celles-ci sont déplacées parallèlement à l'axe de la fibre.

La machine de dénudage conforme à la présente invention permet de dénuder aussi bien une section intermédiaire de fibre optique, qu'un tronçon d'extrémité de celle-ci.

La machine permet de régler aisément la longueur de fibre à dénuder, de quelques millimètres à quelques centimètres.

La machine conforme à la présente invention permet de ne pas fragiliser la fibre optique et par conséquent d'obtenir une fibre qui présente une résistance à la traction supérieure à celle des fibres antérieures. La présente invention a ainsi permis d'obtenir des fibres présentant une résistance à la traction supérieure à 1,8 kg alors que la plupart des équipements connus, généralement à base de pince à dénuder, ne permettent pas d'obtenir une résistance à la traction supérieure à 600 g.

La présente invention permet ainsi d'améliorer la productivité de la fabrication de composants sur fibre optique, en diminuant le taux de rebut.

Le procédé et la machine conformes à la présente invention permettent notamment :
. une grande propreté de la fibre dénudée, ce qui améliore la qualité de composants photo-inscrits dans la fibre,
. une grande qualité d'interface entre la section dénudée et le revêtement,
. de préserver le coeur de la fibre dénudée,
. une bonne reproductibilité de dénudage,
. une bonne résistance à la traction des fibres obtenues, et
. un faible taux de rebut des composants.

Bien entendu dans le cadre de la présente invention, le concept de "tiroir" doit être compris dans un sens large englobant tout système à glissières, platines ou tables de déplacement linéaire, ou rails de guidage.
[1] D. Varelas, "mechnical reliability of optical fiber Bragg gratings", Thèse de doctorat de l'université de Lausane (Suisse), 1998.
[2] S. Boj, "Réalisation de filtres sélectifs en fréquence intégrés dans les fibres optiques et applications", Thèse de doctorat de l'université de Lille, 1995.
[3] Documentation technique des machines de regainage Vytran Corportion, 1999.
[4] Catalogue général des Produits de Département I SES-STERLING
[5] A novel method of removing optical fiber coating with hot air stream, Department of Information and Communications, Kwangju Institute of Science and Technology, 572 Sangamdong,Kwangsan-ku, Kwangju, 506-712, Korea
[6] Catalogue général des Produits de Département II SES-STERLING

## Revendications

1. Procédé de dénudage d'une fibre optique, **caractérisé par le fait qu'**il comprend les étapes qui consistent à :
- retirer localement et mécaniquement une partie du revêtement externe (30) de la fibre (40),
- déposer un solvant chimique (60) sur la périphérie de cette zone de la fibre, et
- retirer mécaniquement le ou les revêtements (30) ainsi fragilisés.

2. Procédé selon la revendication 1, **caractérisé par le fait que** l'étape de retrait local et mécanique d'une partie du revêtement externe (30) de la fibre est une étape d'ablation d'un copeau de revêtement.

3. Procédé selon l'une des revendications 1 ou 2, **caractérisé par le fait que** l'étape de retrait local et mécanique d'une partie de revêtement externe de la fibre est réalisée à l'aide d'une lame (50) orientée selon un angle inférieur à 30° par rapport à l'axe O-O de la fibre.

4. Procédé selon l'une des revendications 1 à 3, **caractérisé par le fait que** la fibre (40) est préalablement positionnée dans un V de précision.

5. Procédé selon l'une des revendications 1 à 4, **caractérisé par le fait qu'**il comprend en outre l'étape consistant à réaliser une incision dans le revêtement (30) de la fibre, légèrement sur l'extérieur de la zone préalablement dénudée, à l'aide d'une lame positionnée perpendiculairement à l'axe de la fibre et à éliminer le tronçon de fibre ainsi délimité.

6. Procédé selon la revendication 5, **caractérisé par le fait qu'**il comprend l'étape qui consiste à effectuer une rotation relative entre la lame et la fibre, avant l'élimination du tronçon de fibre délimité.

7. Procédé selon l'une des revendications 5 ou 6, **caractérisé par le fait qu'**il comprend la réalisation de deux incisions dans le revêtement (30) de la fibre respectivement sur les extrémités de la zone préalablement dénudée.

8. Procédé selon l'une des revendications 5 à 7, **caractérisé par le fait que** l'étape d'élimination du ou des tronçons du revêtement délimité par une incision (42) comprend l'étape de déplacement mécanique dudit tronçon vers le centre de la zone dénudée, par exemple par sollicitation de la lame de coupe (50).

9. Procédé selon l'une des revendications 5 à 8, **caractérisé par le fait que** l'étape d'élimination d'un tronçon délimité par une incision (42) comprend un dépôt de solvant chimique.

10. Procédé selon l'une des revendications 1 à 9, **caractérisé par le fait que** chaque lame (50) utilisée est rigoureusement positionnée afin de ne pas toucher l'ensemble coeur (10)/gaine (20) de la fibre.

11. Procédé selon l'une des revendications 1 à 10, **caractérisé par le fait qu'**il comprend une étape d'élimination mécanique d'une partie de revêtement (30) de fibre préalablement fragilisée par attaque chimique, à l'aide d'un jet d'air sec.

12. Procédé selon l'une des revendications 1 à 11, **caractérisé par le fait qu'**il comprend une étape d'élimination mécanique d'une portion de revêtement (30) préalablement attaquée par solvant chimique, à l'aide d'un pinceau imbibé d'éthanol.

13. Procédé selon l'une des revendications 1 à 12, **caractérisé par le fait qu'**il comprend une étape d'élimination mécanique d'une portion de revêtement (30) de fibre préalablement fragilisée par attaque chimique, à l'aide d'un bain à ultrasons.

14. Fibre optique partiellement dénudée par la mise en oeuvre du procédé conforme à l'une des revendications 1 à 13.

15. Fibre selon la revendication 14, **caractérisée par le fait que** la zone dénudée est une zone intermédiaire de la fibre.

16. Fibre selon la revendication 14, **caractérisée par le fait que** la zone dénudée est une zone d'extrémité.

17. Fibre selon l'une des revendications 14 à 16, **caractérisée par le fait que** la fibre (40) comprend un réseau de Bragg au niveau de sa zone dénudée.

18. Machine de dénudage de fibre optique pour la mise en oeuvre du procédé conforme à l'une des revendications 1 à 13, **caractérisée par le fait qu'**elle comprend des moyens (300) aptes à retirer localement et mécaniquement une partie du revêtement externe de la fibre et des moyens (400) aptes à retirer mécaniquement le revêtement de la périphérie de la zone correspondante de la fibre, après fragilisation de celle-ci à l'aide d'un solvant chimique.

19. Machine selon la revendication 18, **caractérisée par le fait qu'**elle comprend en outre des moyens aptes à déposer un solvant chimique sur la périphérie de la zone traitée de la fibre.

20. Machine selon l'une des revendications 18 et 19, **caractérisée par le fait qu'**elle comprend des moyens (200) aptes à fixer une fibre optique et des moyens (500, 550) aptes à guider des outils de coupe (50, 400) à rotation autour de la fibre.

21. Machine selon l'une des revendications 18 à 20, **caractérisée par le fait qu'**elle comprend des moyens (200, 242) aptes à fixer une fibre optique sous tension constante.

22. Machine selon l'une des revendications 18 à 21, **caractérisée par le fait qu'**elle comprend des moyens (50) de coupe aptes à réaliser successivement un rabotage de la surface externe de la fibre (300) et une découpe partielle généralement transversale à son axe (400).

23. Machine selon l'une des revendications 18 à 22, **caractérisée par le fait qu'**elle comprend une platine (100) qui porte deux moyens (200) de fixation d'une fibre optique, un module de rabotage (300) et un module (400) de mise en forme des interfaces par découpe transversale de la fibre optique.

24. Machine selon l'une des revendications 18 à 23, **caractérisée par le fait qu'**elle comprend des moyens de soufflage et/ou aspiration pour élimination des déchets à éliminer.

25. Machine selon l'une des revendications 18 à 24, **caractérisée par le fait qu'**elle comprend un binoculaire.

26. Machine selon l'une des revendications 18 à 25, **caractérisée par le fait qu'**elle comprend deux tiroirs (500, 550) susceptibles de coulissement relatif dans deux directions orthogonales par rapport à une platine, l'un premier (550) des tiroirs qui porte des outils de coupe (300, 400) étant lui même monté déplacement sur le second tiroir.

27. Machine selon l'une des revendications 18 à 26, **caractérisée par le fait qu'**elle comprend un outil de rabotage (300) et un outil (400) de mise en forme d'interfaces solidaire d'un tiroir (550) commun.

28. Machine selon l'une des revendications 18 à 27, **caractérisée par le fait qu'**elle comprend des moyens de fixation (200) sous forme de pince (210).

29. Machine selon l'une des revendications 18 à 28, **caractérisée par le fait qu'**elle comprend des moyens de fixation (200) définissant un système de guidage et centrage d'une fibre.

30. Machine selon l'une des revendications 18 à 29, **caractérisée par le fait qu'**elle comprend des moyens de fixation (200) définissant un système de guidage et centrage d'une fibre sous forme d'au moins une paire de pions (230) en saillie.

31. Machine selon l'une des revendications 18 à 30, **caractérisée par le fait qu'**elle comprend des moyens de fixation (200) en forme de pince (210) comprenant sur l'une des mâchoires (214) une bande (215) de matériau à fort coefficient de frottement.

32. Machine selon l'une des revendications 18 à 31, **caractérisée par le fait qu'**elle comprend au moins un moyen de fixation (200) susceptible de déplacement sur un chariot (240) sollicité selon l'axe de la fibre sous un effort constant.

33. Machine selon l'une des revendications 18 à 32, **caractérisée par le fait qu'**elle comprend au moins un moyen de fixation (200) susceptible de déplacement sur un chariot (240) relié à un contrepoids (242) par l'intermédiaire d'un cordon passant sur un galet (246).

34. Machine selon l'une des revendications 32 ou 33, **caractérisée par le fait qu'**elle comprend des moyens (250) aptes à immobiliser sélectivement le chariot (240) support du moyen de fixation (200).

35. Machine selon l'une des revendications 18 à 34, **caractérisée par le fait qu'**elle comprend un module de rabotage (300) comportant un support de fibre (310) muni d'une gorge (312) de positionnement de section droite en V.

36. Machine selon la revendication 35, **caractérisée par le fait que** le support de fibre (310) est monté à déplacement verticale contrôlée par rapport à une lame de rabotage (50).

37. Machine selon l'une des revendications 35 ou 36, **caractérisée par le fait que** la gorge (312) débouche sur un méplat (314).

38. Machine selon l'une des revendications 35 à 37, **caractérisée par le fait que** le support de fibre (310) est monté à rotation sur une potence autour d'un axe parallèle à l'axe de la fibre.

39. Machine selon l'une des revendications 35 à 38, **caractérisée par le fait que** le support de fibre (310) est interchangeable.

40. Machine selon l'une des revendications 35 à 39, **caractérisée par le fait que** le support de fibre (310) comprend au moins un flasque (320) muni d'une encoche en V (322) sur l'une des extrémités de la gorge (312).

41. Machine selon l'une des revendications 35 à 40, **caractérisée par le fait que** le support de fibre (310) comprend plusieurs gorges (312) de différentes profondeurs adaptées au diamètre extérieur et à l'épaisseur de revêtement des fibres à traiter.

42. Machine selon l'une des revendications 35 à 41, **caractérisée par le fait que** le support de fibre (310) est associé à un excentrique de déplacement (360).

43. Machine selon l'une des revendications 18 à 42, **caractérisée par le fait qu'**elle comprend un module (400) de mise en forme des interfaces comprenant une pièce (410) comportant des moyens (414) de réception d'une fibre et des moyens d'alignement et de butée vis à vis de lame de coupe et une pièce (450) qui porte au moins une lame de coupe (50).

44. Machine selon la revendication 43, **caractérisée par le fait que** la pièce (450) qui porte au moins une lame de coupe (50) est actionnable en rotation autour de la fibre.

45. Machine selon l'une des revendications 43 ou 44, **caractérisée par le fait que** la pièce (450) qui porte au moins une lame de coupe (50) est actionnable en translation parallèlement à la fibre.

46. Machine selon l'une des revendications 43 à 45, **caractérisée par le fait que** le module (400) de mise en forme comprend plusieurs lames de coupe parallèles.

47. Machine selon l'une des revendications 43 à 46, **caractérisée par le fait que** les deux pièces (410, 450) sont articulées à la manière d'une pince.

48. Machine selon l'une des revendications 43 à 47, **caractérisée par le fait que** la pièce (410) comportant les moyens de réception de fibre présente une gorge en V (414) dont la profondeur est adaptée au diamètre de la fibre.

49. Machine selon l'une des revendications 43 à 48, **caractérisée par le fait que** les deux pièces (410, 450) sont montées sur un bloc (430) monté à rotation sur une embase (470) portée par un tiroir (550) susceptible de translation parallèlement à l'axe de la fibre.

50. Machine selon la revendication 49, **caractérisée par le fait qu'**elle comprend un tiroir intermédiaire (500) monté à translation sur le tiroir (550) premier cité transversalement à l'axe de la fibre et qui porte lui même l'embase (470).

51. Machine selon l'une des revendications 43 à 50, **caractérisée par le fait que** le module (400) de mise en forme comprend une pièce (410) de positionnement de fibre, amovible.

52. Machine selon l'une des revendications 18 à 51, **caractérisée par le fait qu'**elle comprend des blocs porte lames (50) amovibles.

53. Machine selon l'une des revendications 18 à 52, **caractérisée par le fait qu'**elle comprend des moyens de réglage de l'inclinaison des lames de coupe (50).

54. Machine selon l'une des revendications 18 à 53, **caractérisée par le fait qu'**elle comprend des lames de coupe (50) chauffantes.

55. Machine selon l'une des revendications 18 à 54, **caractérisée par le fait qu'**elle comprend des butées limitant l'amplitude de déplacement de tiroirs (500, 550) portant les outils de coupe.
